Europäisches Patentamt

European Patent Office

Office européen des brevets

(11) Veröffentlichungsnummer: **0 443 318 A2**

# EUROPÄISCHE PATENTANMELDUNG

(21) Anmeldenummer: 91100395.2

(22) Anmeldetag: 15.01.91

(51) Int. Cl.⁵: **C09J 133/06, C08J 3/20**

Die Bezeichnung der Erfindung wurde geändert (Richtlinien für die Prüfung im EPA, A-III, 7.3).

(30) Priorität: 19.01.90 DE 4001431

(43) Veröffentlichungstag der Anmeldung:
28.08.91 Patentblatt 91/35

(84) Benannte Vertragsstaaten:
AT BE CH DE ES FR GB GR IT LI NL SE

(71) Anmelder: **HOECHST AKTIENGESELLSCHAFT**
**Postfach 80 03 20**
**W-6230 Frankfurt am Main 80(DE)**

(72) Erfinder: **Schmelzer, Heinz, Dipl.-Ing.**
**Schlossbergstrasse 15**
**W-6531 Rümmelsheim(DE)**
Erfinder: **Küchler, Manfred, Dipl.-Ing.**
**Bleibiskopfstrasse 5**
**W-6370 Oberursel(DE)**

(54) **Schmelzkleber mit verbesserter Applikationsstandzeit.**

(57) Schmelzklebmassen mit verlängerter Applikationsstandzeit aus klebaktiven thermoplastischen Massen mit hoher Kohäsion und geringer Fließneigung auf der Basis von Copolymerisaten A) aus ethylenisch ungesättigten Monomeren mit Gehalten an chelatisierenden Metallverbindungen B) sowie gegebenenfalls anderen üblichen Zusätzen C), wobei diese Schmelzklebmassen zur Verlängerung der Applikationsstandzeit und zur Verbesserung der thermoplastischen Verarbeitbarkeit als Vernetzungsregulator zusätzlich ein Alkylphenolharz oder ein Arylphenolharz in Mengen bis zu 20 Gew.-%, bezogen auf das Copolymerisat A), enthalten. Verfahren zur Herstellung der Schmelzklebmassen durch Vermischen der Ausgangskomponenten.

EP 0 443 318 A2

## SCHMELZKLEBER MIT VERBESSERTER APPLIKATIONSSTANDZEIT UND VERFAHREN ZU IHRER HERSTELLUNG

Die Erfindung betrifft Schmelzklebmassen mit verlängerter Applikationsstandzeit aus klebaktiven thermoplastischen Massen mit hoher Kohäsion und geringer Fließneigung auf der Basis von Copolymerisaten ethylenisch ungesättigter Monomerer mit Gehalten an chelatisierenden Metallverbindungen sowie gegebenenfalls Streckmitteln und anderen üblichen Zusätzen, wobei diese Schmelzklebmassen zur Verlängerung der Applikationsstandzeit, zur Erhöhung der Wärmestandfestigkeit und der Vernetzungstemperatur und damit zur Verbesserung der thermoplastischen Verarbeitbarkeit zusätzlich einen Vernetzungsregulator, vorzugsweise ein Alkylphenolharz oder ein Arylphenolharz, enthalten. Ferner Verfahren zur Herstellung erfindungsgemäßer klebaktiver thermoplastischer Massen durch Vermischen der Ausgangskomponenten.

Aus der EP-Patentschrift 46941 sind thermoplastische Massen mit erhöhter Kohäsion und geringer Fließneigung sowie deren Verwendung u.a. als Schmelz- und Schmelzhaftklebstoffe bekannt. Sie bestehen im wesentlichen aus

(A) mindestens einem Copolymerisat aus mindestens einem Alkylester von $\alpha,\beta$-ethylenisch ungesättigten Mono- und/oder Dicarbonsäuren, mindestens einem am Stickstoff unsubstituierten Amid $\alpha,\beta$-ethylenisch ungesättigter Mono- und/oder Dicarbonsäuren, mindestens einer $\alpha,\beta$-ethylenisch ungesättigten Mono- und/oder Dicarbonsäure und gegebenenfalls mindestens einer anderen $\alpha,\beta$-ethylenisch ungesättigten copolymerisationsfähigen monomeren Verbindung, und enthalten

(B) mindestens eine vernetzend wirkende Substanz, die eine Metallverbindung eines Acetessigsäurealkylesters mit 1 bis 6 C-Atomen in der Alkylgruppe oder eines zweiwertigen Alkohols mit 2 bis 6 C-Atomen ist, wobei das Metallatom ein Element aus der zweiten, dritten oder vierten Gruppe des Periodensystems der Elelemente ist, und sie enthalten gegebenenfalls

(C) weitere, als Streckmittel wirkende sowie andere übliche Zusätze.

Da die Vernetzung bei Zusatz der reinen Metallverbindung zu Inhomogenitäten und Eigenschaftsanisotropien führen kann, wird der Vernetzer (B) bevorzugt in homogener Mischung mit einem mit dem Copolymerisat (A) gut verträglichen Kunstharz aus der Komponente (C), vorzugsweise einem Terpenphenolharz, zugesetzt. Die Herstellung der u.a. als Schmelzkleber geeigneten thermoplastischen Massen erfolgt dabei in der Weise, daß das Copolymerisat (A) zusammen mit der Vernetzerkomponente (B) und gegebenenfalls weiteren Zusätzen (C) in einem heizbaren Mischaggregat, wie einem Kneter oder Extruder, bei 100 bis 150° C behandelt wird, wobei eine Vernetzung des Copolymerisats (A) eintritt. Der Mischvorgang soll abgebrochen werden, wenn eine bemerkbare Erhöhung der Kohäsion der Mischung eingetreten und keine wesentliche Steigerung mehr zu beobachten ist, was je nach der angewandten Temperatur im allgemeinen nach 1 bis 15 Minuten der Fall sein soll.

Wie sich inzwischen aber gezeigt hat, führt der beschriebene Mischvorgang im allgemeinen nicht zu solchen mittleren Vernetzungsgraden, wie sie für die erforderliche Kohäsionssteigerung zunächst benötigt und gewünscht wird, sondern es tritt sehr rasch und meist spontan eine Überveretzung unter Gelbildung auf, die ein weiteres thermoplastisches Verarbeiten der Masse nicht mehr zuläßt. Dieses Verfahren hat daher für die praktische Verwendung der Massen den entscheidenden Nachteil, daß deren Applikationsstandzeit, vom Beginn des Mischvorganges der Ausgangskomponenten an gerechnet, lediglich ca. 5 bis 15 Minuten beträgt. Danach sind die vernetzten Massen unschmelzbar und gummiartig, ohne jedoch ihre Haftklebereigenschaften und Oberflächenklebrigkeit zu verlieren. Sie sind aber nicht mehr thermoplastisch verarbeitbar, was zu erheblichen Verlusten und zu Schäden an den Schmelz- und Applikationsvorrichtungen führen kann.

Der vorliegenden Erfindung lag somit die Aufgabe zugrunde, klebaktive thermoplastische Massen mit hoher Kohäsion und geringer Fließneigung verfügbar zu machen, die eine verlängerte Verweilzeit in der Schmelzanlage und eine verlängerte Applikationsstandzeit ohne störende Überveretzung bzw. Gelbildung während der Verarbeitung ermöglichen, und deren Nachvernetzung in geeigneter Weise, beispielsweise durch thermische Behandlung bei Temperaturen oberhalb der Applikationstemperatur, in dem erforderlichen Ausmaß ohne Nachteile anschließend vollzogen werden kann.

Es wurde nun überraschenderweise gefunden, daß die gestellte Aufgabe dadurch gelöst werden kann, daß man den genannten klebaktiven thermoplastischen Massen mit erhöhter Kohäsion und geringer Fließneigung einen spezifisch wirkenden Vernetzungsregulator zusetzt. Als bevorzugte Vernetzungsregulatoren wurden dabei Alkylphenolharze oder Arylphenolharze, insbesondere Alkylphenolharze, gefunden. Besonders bevorzugt sind Alkylphenolharze auf der Basis von trifunktionellen und/oder vorzugsweise bifunktionellen $(C_1-C_{12})$-Alkylphenolen, insbesondere von $(C_3-C_8)$-Alkylphenolen. Bevorzugte Arylphenolharze sind solche auf der Basis von mehrfachfunktionellen p-Phenylphenolen.

Die erfindungsgemäß verwendeten Alkylphenolharze bzw. Arylphenolharze sind insbesondere übliche Umsetzungsprodukte von Alkylphenolen bzw. Arylphenolen mit Aldehyden, vorzugsweise mit Formaldehyd. Sie werden vorzugsweise in ihrer Resolform den thermoplastischen Massen zugesetzt, wobei sie entweder separat oder im Gemisch mit der Vernetzerkomponente (B) in die thermoplastische Masse eingemischt werden. Es hat sich überraschenderweise gezeigt, daß insbesondere Alkylphenolharze die Vernetzungsreaktion bei Verarbeitungstemperaturen bis zu 120°C besonders effizient inhibieren können, jedoch bei Temperaturen oberhalb von 130°C ihre inhibierende Wirkung überraschenderweise verlieren, so daß bei Temperaturen oberhalb von 130°C der erforderliche Endvernetzungszustand der klebaktiven thermoplastischen Massen und deren Überführung in die Unschmelzbarkeit nach vorausgegangener thermoplastischer Applikation ohne Nachteile und ohne Verlust der Klebaktivität herbeigeführt werden können. Unterhalb von 130°C kann die erfindungsgemäße Schmelzklebermasse aber mindestens 4 Stunden als geschmolzene Masse ohne störende Übervernetzungserscheinungen bzw. Gelierungen in thermoplastisch verarbeitbarer Form verfügbar gehalten werden. Durch höhere Anteile an Vernetzungsregulator können längere Applikationszeiten erzielt werden. Es ist aber auch möglich und kann in manchen Fällen vorteilhaft sein, wirksame Teilmengen des Vernetzungsregulators jeweils in zeitlichen Abständen in die thermoplastische Schmelze einzuarbeiten und dadurch die Applikationsstandzeit nach Bedarf zu verlängern, z.B. auf mehr als einen Tag. Gegebenenfalls kann man die klebaktive thermoplastische Schmelze auch auf Raumtemperatur abkühlen und später unter erneuter Zugabe einer wirksamen Menge Vernetzungsregulator wieder aufschmelzen und in einen applikationsfähigen thermoplastischen Zustand überführen. Im Gegensatz zu der temperaturbereichsspezifisch vernetzungsregulierenden Wirksamkeit erfindungsgemäßer Vernetzungsregulatoren zeigen z.B. die in der EP-PS 46941 als Zusatzkomponenten (C) beschriebenen Zusätze, insbesondere die dort beschriebenen Terpenphenolharze, keine vernetzungsregulierende Wirksamkeit, so daß die Wirkung der erfindungsgemäßen Vernetzungsregulatoren um so überraschender erscheint.

Gegenstand der Erfindung sind daher klebaktive thermoplastische Massen mit hoher Kohäsion, geringer Fließneigung und verlängerter Applikationsstandzeit auf der Basis von Copolymerisaten ethylenisch ungesättigter Monomerer und chelatisierender Mittel, bestehend aus

A) 90 bis 99,99 Gew.-%, vorzugsweise 95 bis 99,9 Gew.-%, mindestens eines Copolymerisats aus

a) 20 bis 95 Gew.-%, vorzugsweise 40 bis 80 Gew.-%, mindestens eines $(C_1-C_{12})$-Alkylesters $\alpha,\beta$-ethylenisch ungesättigter Mono- und/oder Dicarbonsäuren,

b) 0,1 bis 20 Gew.-%, vorzugsweise 0,5 bis 15 Gew.-%, mindestens eines am Stickstoff unsubstituierten Amids $\alpha,\beta$-ethylenisch ungesättigter Mono- und/oder Dicarbonsäuren,

c) 0,1 bis 15 Gew.-%, vorzugsweise 0,2 bis 10 Gew.-%, mindestens einer $\alpha,\beta$-ethylenisch ungesättigten Mono- und/oder Dicarbonsäure, und

d) 0 bis 50 Gew.-%, vorzugsweise 0 bis 40, insbesondere 0,1 bis 30 Gew.-%, mindestens einer anderen, von den unter a) bis c) genannten Monomeren verschiedenen $\alpha,\beta$-ethylenisch ungesättigten copolymerisationsfähigen Verbindung, und

B) 0,01 bis 10 Gew.-%, vorzugsweise 0,1 bis 5 Gew.-%, mindestens einer vernetzend wirkenden Substanz, die eine Metallverbindung eines Acetessigsäurealkylesters mit 1 bis 6 C-Atomen in der Alkylgruppe oder eines zweiwertigen Alkohols mit 2 bis 6 C-Atomen ist, in der das Metallatom ein Element der zweiten, dritten oder vierten Gruppe des Periodensystems der Elemente ist, wobei sich die Mengen aus A) + B) sowie aus a) bis d) zu jeweils 100 Gew.-% ergänzen müssen, und gegebenenfalls

C) weiteren, als Streckmittel wirkenden sowie anderen üblichen Zusätzen, dadurch gekennzeichnet, daß die klebaktiven thermoplastischen Massen zusätzlich

D) eine wirksame Menge eines Vernetzungsregulators enthalten.

Als Vernetzungsregulatoren werden vorzugsweise Alkylphenolharze oder Arylphenolharze, insbesondere Alkylphenolharze, verwendet. Besonders bevorzugt sind Alkylphenolharze aus trifunktionellen und/oder vorzugsweise bifunktionellen $(C_1-C_{12})$-Alkylphenolen, insbesondere von $(C_3-C_8)$-Alkylphenolen und Aldehyden. Bevorzugte Arylphenolharze sind solche aus mehrfachfunktionellen p-Phenylphenolen und Aldehyden. Besonders bevorzugt sind Harze aus den genannten Alkyl- bzw. Arylphenolen und Formaldehyd, insbesondere Harze des Resoltyps.

Besonders bevorzugt sind beispielsweise Alkylphenol/ Formaldehydharze des Resoltyps, wie z.B. das Handelsprodukt ®Alresen PA 103 (Hersteller: Hoechst AG).

Die Einsatzmenge an Vernetzungsregulator D) beträgt erfindungsgemäß vorzugsweise 2 bis 20 Gew.-%, insbesondere 5 bis 15, besonders bevorzugt 8 bis 12 Gew.-%, bezogen auf die Menge an Copolymerisat A), wobei die Obergrenzen der genannten Einsatzmengen nicht kritisch sind.

Die Einarbeitung des Vernetzungsregulators D) in die thermoplastischen Massen kann nach üblichen Methoden erfolgen. Bevorzugt wird dabei so verfahren, daß zunächst das Copolymerisat A) in einem heizbaren Mischaggregat, z.B. einem Kneter, vorzugsweise bei einer Temperatur von 90 bis 130°C,

EP 0 443 318 A2

insbesondere 110 bis 120°C, aufgeschmolzen wird, wobei es im allgemeinen eine zähflüssige, honigartige Konsistenz annimmt. Dem geschmolzenen Copolymerisat A) wird sodann der Vernetzungsregulator D), der vorzugsweise in fester Form vorliegt, beigemischt, wobei er sich in der Schmelze des Copolymerisats A) löst. Anschließend werden der Schmelze in dem beheizten Mischaggregat noch die Komponenten B) und gegebenenfalls C) beigemischt, wobei diese Komponenten sich bei der genannten und einzuhaltenden Schmelztemperatur, vorzugsweise bei 110 bis 120°C, und guter Durchmischung entweder lösen oder homogen dispers verteilen, wobei die gewünschte klebaktive thermoplastische und thermisch noch weiter vernetzbare Masse mit hoher Kohäsion und geringer Fließneigung in applikationsfähiger Form resultiert und bei Temperaturen bis zu 120°C, vorzugsweise zwischen 110 und 120°C, mindestens 4 Stunden bzw. bis zu einem Tag oder länger ohne wesentliche Viskositätserhöhung bzw. Übervernetzungserscheinungen in thermoplastisch applikationsfähigem Zustand gehalten werden kann. Nach erfolgter thermoplastischer Applikation, z.B. Ausziehen mit einer Rakel oder anderen Auftragsgeräten zu einem Film, kann die thermoplastische Masse durch Temperaturerhöhung auf über 130°C, vorzugsweise auf 130 bis 200°C, insbesondere auf 150 bis 180°C, in den erforderlichen, unschmelzbaren Endvernetzungszustand übergeführt werden.

Eine weitere bevorzugte Variante der Erfindung besteht darin, daß die Komponenten B) und D) als Gemisch in die thermoplastische Schmelzklebermasse eingearbeitet werden, gegebenenfalls auch im Gemisch mit weiteren Bestandteilen der Komponente C), wobei diese Gemische Lösungen oder disperse Systeme darstellen können. Es kann ferner in manchen Fällen besonders vorteilhaft sein, wenn man den Vernetzungsregulator D) portionsweise in zeitlichen Abständen der thermoplastischen Masse beimischt.

Das Aufschmelzen und Vermischen der Komponenten A) bis D) kann diskontinuierlich, z.B. in einem Kneter, oder kontinuierlich, vorzugsweise in einem heizbaren Einschnecken- oder Zweischneckenextruder mit entsprechenden, in der gewünschten Reihenfolge angeordneten Einspeis- und Mischzonen, erfolgen. Bevorzugt werden heizbare Doppelschneckenextruder verwendet. In manchen Fällen kann es vorteilhaft sein, die applikationsfähige thermoplastische Schmelzklebermasse unter Inertgasatmosphäre, z.B. Stickstoff, herzustellen und bis zur Applikation unter Inertgas zu halten, um z.B. Verfärbungen vorzubeugen.

Da die Komponente C) häufig ein Streckmittel für die Komponente B) darstellt oder enthält, kann es in manchen Fällen vorteilhaft sein, die Komponenten B) und C) vorab separat miteinander zu vermischen und das resultierende Gemisch zur Herstellung der thermoplastischen Schmelzklebermasse einzusetzen.

Weiterer Gegenstand der Erfindung sind daher Verfahren zur Herstellung erfindungsgemäßer klebaktiver thermoplastischer Massen mit hoher Kohäsion, geringer Fließneigung und verlängerter Applikationsstandzeit durch Vermischen der Komponenten A) + D) und B) und gegebenenfalls C) in heizbaren Mischaggregaten, wie z.B. Knetern, Einschneckenextrudern oder Doppelschneckenextrudern, vorzugsweise bei Temperaturen zwischen 90 und 130°C, insbesondere 110 bis 120°C, entweder diskontinuierlich oder kontinuierlich.

Gegenstand der Erfindung ist ferner die Applikation erfindungsgemäßer thermoplastischer Schmelzklebermassen in nicht übervernetzter und nicht gelierter Form bei Temperaturen von 90 bis 130°C, vorzugsweise bei 110 bis 120°C, und nachfolgende Überführung der klebaktiven thermoplastischen Massen in den erforderlichen unschmelzbaren Endvernetzungszustand durch thermische Behandlung bei Temperaturen oberhalb von 130°C, vorzugsweise 130 bis 200°C, insbesondere bei 150 bis 180°C.

Als Komponenten D) kommen vorzugsweise Alkylphenol/Formaldehyd-Harze mit Alkylphenolgruppen aus p-Isobutylphenol, p-tert.-Butylphenol, p-tert.-Amylphenol, p-Isooktylphenol und o- bzw. p-Cyclohexylphenol sowie p-Phenylphenol/Formaldehyd-Harze, alle vorzugsweise vom Resoltyp, zur Anwendung. Besonders bevorzugt sind Butylphenol/Formaldehyd-Harze in der Resolform.

Geeignete Carbonsäuren für die Komponenten a) bis c) des Copolymerisates A) sind z.B. Crotonsäure, Itakonsäure, Maleinsäure und/oder Fumarsäure, sowie vom Styrol abgeleitete, carboxylgruppenhaltige Monomere, vorzugsweise aber Acryl- und/oder Methacrylsäure.

Alkylreste in der Esterkomponente a) sind vorzugsweise z.B. Methyl, Ethyl, Propyl, Butyl, Hexyl, 2-Ethylhexyl, Decyl und Dodecyl sowie deren Isomeren.

Als Amide b) werden die Mono- und/oder Diamide der genannten Säuren sowie die Monoamide der Monoester der vorgenannten ungesättigten Dicarbonsäuren mit 1 bis 12 C-Atomen in der Alkylgruppe, z.B. den vorgenannten Alkylresten, eingesetzt. Besonders vorteilhaft ist es, wenn als Komponente a) 2-Ethylhexylacrylat allein oder in Mischung mit Butylacrylat verwendet wird oder wenn in einem Gemisch mit anderen Estern ein überwiegender Anteil von über 50 Gew.-% 2-Ethylhexylacrylat oder dessen Mischung mit Butylacrylat eingesetzt wird. In der genannten Mischung der beiden Ester kann der Anteil an Butylacrylat bis zu 70, vorzugsweise 10 bis 50 Gew.-%, bezogen auf 100 Gew.-% des Estergemisches, betragen. Unter Butylacrylat wird dabei das n-, sec-, tert.- oder iso-Butylacrylat verstanden, wobei n-Butylacrylat bevorzugt ist.

4

Geeignete Verbindungen d) sind vorzugsweise z.B. Styrol, α-Methylstyrol, die verschiedenen Vinyltoluole, Ethylen, Vinylacetat und/oder Vinylchlorid.

In einer bevorzugten Ausführungsform der erfindungsgemäßen klebaktiven thermoplastischen Massen wird als Copolymerisat A) ein Produkt verwendet, das aus a) 55 bis 65 Gew.-% 2-Ethylhexylacrylat, 15 bis 30 Gew.-% Butylacrylat und 3 bis 15 Gew.-% Methylmethacrylat, b) 2 bis 10 Gew.-% Acrylamid und c) 0,3 bis 5 Gew.-% Acrylsäure, jeweils bezogen auf das Copolymerisat A), aufgebaut ist.

Die Copolymerisate A) können nach üblichen Herstellungsmethoden, wie Lösungs- oder Substanzpolymerisation, Block- oder Pfropfpolymerisation, unter Verwendung von Polymerisationsinitiatoren, gegebenenfalls unter Mitverwendung von Molekulargewichtsreglern, erhalten werden. Die günstigsten Ergebnisse können erhalten werden, wenn man die Copolymerisation in Gegenwart von Lösungsmitteln durchführt und anschließend die Lösungsmittel durch Destillation bei erhöhter Temperatur, d.h. bis zu etwa 200°C, gegebenenfalls unter vermindertem Druck, abtrennt. Als Polymerisationsinitiatoren eignen sich vorzugsweise Peroxide, wie Di-tert.-butylperoxid, Di-cumyl-peroxid, Cumolhydroperoxid, tert.-Butylhydroperoxid, tert.-Butylperbenzoat, tert.-Butylperoktoat, Dibenzoyl-peroxid, Methylethylketonperoxid, jeweils einzeln oder im Gemisch, oder Azoisobuttersäuredinitril, in Mengen von 0,1 bis 3, vorzugsweise 0,3 bis 1 Gew.-%, bezogen auf die Summe der Komponenten a) bis d). Geeignete Lösungsmittel sind z.B. aromatische Kohlenwasserstoffe, wie Toluol und Xylol, und deren Mischungen mit gesättigten Kohlenwasserstoffen, wie Cyclohexan oder Benzinfraktionen, und/oder Alkohole, z.B. die verschiedenen Butanole. Da einige Lösungsmittel, beispielsweise aromatische Kohlenwasserstoffe oder Alkohole, kettenabbrechend wirken können, läßt sich durch die Auswahl des verwendeten Lösungsmittelgemisches das Molekulargewicht bzw. die Viskosität der Copolymerisate und damit der Haftschmelzkleber beeinflußen.

Die Copolymerisate A) besitzen meistens eine Schmelzviskosität, gemessen bei 180°C, von 5000 bis 100000, vorzugsweise 10000 bis 50000 mPa•s. Sie besitzen eine hohe thermische Stabilität und können daher bei Temperaturen bis zu 200°C und während Zeiträumen von bis zu 72 Stunden ohne größere Veränderungen in der Viskosität, Farbe oder sonstigen Eigenschaften als Schmelze gehalten werden.

Das Metallatom in den vernetzend wirkenden Substanzen B) ist vorzugsweise z.B. Zink, Magnesium, Bor oder Titan, insbesondere aber Aluminium. Die Mengenangaben der Metallverbindungen von 0,01 bis 10 Gew.-% (als 100 %ige Substanz berechnet) beziehen sich auf die Summe der Komponenten A) + B) (= 100 Gew.-%).

Die Komponente C) wird gegebenenfalls in Mengen von 1 bis 500, vorzugsweise 50 bis 250 Gewichtsteilen, bezogen auf 100 Gewichtsteile der Summe der Komponenten A) + B), eingesetzt, jedoch ist auch die Verwendung geringerer Mengen möglich.

Als Zusätze C) können z.B. natürliche Harze wie Balsam-, Wurzel-, Tall-, Kolophonium- und Kopalharze sowie davon abgeleitete modifizierte Harze verwendet werden. Die Modifizierung kann mit mehrwertigen Alkoholen, z.B. Glycerin, Pentaerythrit und Glykolen durch Veresterung oder durch Umsetzung mit ethylenisch ungesättigten Mono- und/oder Dicarbonsäuren, z.B. den obengenannten, erfolgen. Es können auch Copolymerisate von veresterten Naturharzen mit Styrol, den verschiedenen Vinyltoluolen oder Acryl- bzw. Methacrylsäure verwendet werden. Besonders vorteilhaft sind Terpenphenolharze sowie mit Phenolharzen modifizierte Kolophoniumharze.

Harze, die gegebenenfalls als Komponente C) eingesetzt werden, sind im allgemeinen vorzugsweise in einer Menge von 1 bis 100, insbesondere 2 bis 50 Gew.-Teilen, bezogen auf 100 Gew.-Teile der Summe der Komponenten A) + B), zugegen.

Weiterhin kommen als Komponente C) gegebenenfalls synthetische Harze, wie Kohlenwasserstoffharze, z.B. auf Basis von Dicyclopentadien, Cumaron, Inden oder der bei der petrochemischen Verarbeitung von Erdöl anfallenden C$_4$- bis C$_5$- bzw. C$_9$-Destillationsfraktionen in Betracht. Ebenfalls geeignet sind Harze auf der Basis von Ketonen, wie Aceton, Methylethylketon und Cyclohexanon, die durch Umsetzung dieser Verbindungen mit Formaldehyd erhalten werden.

Als weitere Zusätze C) kommen gegebenenfalls Weichmacher, z.B. solche auf Basis von Phthal-, Adipin-, Sebacin-, Acelain- und Phosphorsäureestern in Betracht, wobei der Alkoholrest 1 bis 13 C-Atome enthält. Außerdem können die Phosphorsäureester mit Phenol bzw. Kresol verestert sein. Es können auch Weichmacher verwendet werden, die mit dem Copolymerisat A) mittels einer monofunktionellen reaktiven Gruppe reagieren, wie Glycidyläther oder langkettige Monoisocyanate, sowie Extenderöle, wie z.B. Mineralöl.

Als weitere Zusätze C) kommen gegebenenfalls außerdem Wachse in Betracht, wie Montanwachse oder synthetische Produkte auf der Basis von Olefinen, z.B. Polyethylen- oder Polypropylenwachse, sowie niedrigmolekulare Polymerisationsprodukte von Isobutylen, Butadien, Isopren, Styrol, Vinylalkyläthern, deren Alkylrest 1 bis 8 C-Atome enthält, Vinylcarbonsäureestern, in denen der Carbonsäurerest 1 bis 12 C-Atome enthält, Vinylcyclohexan oder α-Methylstyrol. Bei gegebener Verträglichkeit sind auch thermoplastische Kautschuke, wie sie z.B. durch Blockcopolymerisation von Styrol mit Butadien oder Styrol mit Isopren erhalten werden können, als Zumischkomponenten geeignet.

Aus der Klasse der bituminösen Produkte bieten sich gegebenenfalls z.B. rohe, geblasene, oxydierte oder anderweitig modifizierte Bitumina an, wie sie bei der Erdöl- oder Kohleaufbereitung gewonnen werden können.

Als Zusatz C) kommen gegebenenfalls auch Füllstoffe in Betracht, z.B. anorganische Produkte wie Bariumsulfat, Calciumkarbonat, Calciumsulfat, Magnesiumsilikat, Calcium-Magnesiumkarbonat, Aluminiumoxid, Quarzmehl, kolloidale oder hochdisperse Kieselsäuren, die sämtlich allein oder in Gemischen eingesetzt werden können. Auch Pigmente können verwendet werden, sie müssen aber eine hohe Temperaturbeständigkeit aufweisen und sollen zweckmäßig der Klasse der anorganischen Produkte oder hochstabilen organischen Verbindungen, wie z.B den Phthalocyanin-Farbstoffen, angehören. Auch verstärkend wirkende Faserstoffe können als Streckmittel mitverwendet werden, z.B. Asbest oder Glasfasern sowie auch synthetische Produkte wie Polyester- oder Polyamidfasern.

Die erfindungsgemäßen klebaktiven thermoplastischen Massen können, insbesondere wegen ihrer verlängerten Applikationsstandzeit und der daraus resultierenden guten und unproblematischen Handhabbarkeit, besonders vorteilhaft verwendet werden z.B. als Schmelz- und Schmelzhaftklebstoffe, Kaschierklebstoffe, siegelfähige Beschichtungen, sonstige Klebe- oder Sperrschichten, Folien und Bahnen, ferner als Schutzschicht auf Metallen durch direkten Auftrag oder durch Aufbringen in Form von Folien.

Die Erfindung wird durch die nachstehenden Beispiele näher erläutert. Es bedeuten GT = Gewichtsteile und % = Gew.-%, sofern nichts anderes angegeben ist.

## Beispiel 1

Für die Durchführung von Applikationsstandzeitversuchen werden zur Herstellung von klebaktiven thermoplastischen Massen mit hoher Kohäsion und geringer Fließneigung, die durch thermische Nachbehandlung in unschmelzbare, gummiartige und oberflächenaktive Haftklebermassen überführt werden können, die nachstehend beschriebenen Ausgangskomponenten mit den angegebenen Zusammensetzungen verwendet.

## Komponente A:

Festes, durch Lösungscopolymerisation hergestelltes Copolymerisat, pulverförmig und aus folgenden Comonomereinheiten bestehend:
61 Gew.-% Acrylsäure-2-ethylhexylester
23 Gew.-% Acrylsäurebutylester
9 Gew.-% Methacrylsäuremethylester
6 Gew.-% Acrylsäureamid
1 Gew.-% Acrylsäure

Das Copolymerisat hat eine Schmelzviskosität von 45000 mPa$\cdot$s bei 180 $^\circ$C und eine Glasübergangstemperatur ($T_G$) von -45 $^\circ$C.

## Komponente B:

Handelsübliches Aluminiumalkoholat, fest, grobkörnig
(®Additol VXL 12, Hersteller: Hoechst AG).

## Komponente C:

Handelsübliches Terpenphenolharz, fest, schuppenförmig
(®Alresen PT 214, Hersteller: Hoechst AG).

## Komponente D:

Handelsübliches Alkylphenol/Formaldehyd-Harz vom Resoltyp, fest, schuppenförmig
(®Alresen PA 103, Hersteller: Hoechst AG).

## Vergleichsbeispiel 1

In einen heizbaren Kneter werden die nachstehend genannten Komponenten aus Beispiel 1 in der angegebenen Reihenfolge und Menge bei 120°C eingegeben und unter intensiver Durchmischung in eine Schmelze von 120°C übergeführt, und zwar folgendermaßen:

Es werden zunächst 100 GT Komponente A eingegeben und aufgeschmolzen. Dieser Schmelze wird sodann ein zuvor zusammengeschmolzenes und anschließend pulverisiertes Gemisch aus 9 GT Komponente C und 2 GT Komponente B zugesetzt und homogen eingemischt, wobei man bei 110 bis 120°C eine klebaktive thermoplastische Masse mit hoher Kohäsion und geringer Fließneigung in applikationsfähiger Form erhält, die unter ständiger leichter Durchmischung auf einer Temperatur von ca. 120°C gehalten wird. Nach dem Einmischen des Komponentengemisches aus C und B steigt die Viskosität der Mischung alsbald an und ist 5 Minuten später bereits deutlich erhöht. Ca. 15 Minuten später geliert die Masse, offensichtlich infolge von Übervernetzung, sehr stark und wird unschmelzbar und gummiartig, ohne jedoch die Haftklebereigenschaften und die Oberflächenklebaktivität zu verlieren, und sie ist nicht mehr thermoplastisch verarbeitbar. Durch anschließende thermische Nachbehandlung bei 180°C kann die Übervernetzung noch verstärkt werden. Aufgrund ihrer kurzen Applikationsstandzeit von max. 15 Minuten bei 120°C ist die thermoplastische Masse nur während dieser sehr kurzen Zeitspanne verarbeitbar und wird danach unbrauchbar.

## Beispiele 2 bis 4

Das Vergleichsbeispiel 1 wird jeweils wiederholt mit folgenden erfindungsgemäßen Abänderungen:

Der Ausgangskomponente A werden nach dem Aufschmelzvorgang bei der Schmelztemperatur von A zunächst 2 GT (= Beispiel 2) bzw. 8 GT (= Beispiel 3) bzw. 15. GT (= Beispiel 4) der Komponente D aus Beispiel 1 (= Alkylphenolharz) zugesetzt und eingearbeitet, wobei sich die Komponente D in der Komponente A löst. Anschließend werden jeweils die Komponenten B und C wie in Vergleichsbeispiel 1 beschrieben eingearbeitet und die in applikationsfähiger Form mit hoher Kohäsion und geringer Fließneigung resultierenden klebaktiven thermoplastischen Massen unter ständiger leichter Durchmischung auf einer Temperatur von ca. 120°C gehalten. Es sind in der Tabelle 1 Zeiten (Stunden) zusammengefaßt wiedergegeben, nach welchen bei ca. 120°C die Massen jeweils noch thermoplastisch und applikationsfähig sind (Applikationsstandzeit *). Die Massen werden nach den angegebenen Applikationsstandzeiten jeweils mittels einer Rakel in Folienform von 2 mm Dicke auf Edelstahlblech appliziert und anschließend 30 Minuten auf 170°C erwärmt. In Tabelle 1 ist hierzu angegeben, ob nach dieser 30-minütigen Erwärmung auf 170°C die gewünschte bzw. erforderliche Übervernetzung eingetreten ist und die Masse jeweils unschmelzbar und gummiartig wurde unter Erhalt ihrer Haftklebereigenschaften und ihrer Oberflächenklebaktivität.

## Beispiel 5

Das Beispiel 4 wird wiederholt mit der Abänderung, daß die Zugabe und Einarbeitung der 15 GT der Komponente D nicht auf einmal, sondern in 3 Portionen zu verschiedenen Zeiten erfolgt, und zwar

a) 4 GT Komponente D beim Aufschmelzen der Komponente A,

b) 5 GT Komponente D 5 Stunden nach Einarbeitung der Komponenten B und C, und

c) 6 GT Komponente D 10 Stunden nach Einarbeitung der vorstehend unter b) genannten 5 GT der Komponente D.

In der Tabelle 1 ist eine Zeit angegeben, nach welcher die ständig auf ca. 120°C gehaltene klebaktive Schmelzmasse noch thermoplastisch und applikationsfähig ist (Applikationsstandzeit *) und appliziert wird, sowie ob nach erfolgter thermoplastischer Applikation als Folie durch nachfolgendes 30 Minuten langes Erwärmen der Folie auf 170°C die gewünschte Übervernetzung jeweils noch erzielt wird.

## Beispiel 6

Beispiel 5 wird wiederholt mit der Abänderung, daß jeweils vor der Zugabe der Anteile b) (5 GT

---

*) Die angegebenen Zeiten stellen nicht die maximal resultierbaren Applikationsstandzeiten dar. Letztere liegen jeweils höher und wurden nicht ermittelt.

*) Die angegebenen Zeiten stellen nicht die maximal resultierbaren Applikationsstandzeiten dar. Letztere liegen jeweils höher und wurden nicht ermittelt.

Komponente D) und c) (6 GT Komponente D) die Schmelze auf Raumtemperatur abgekühlt und nach 5 Stunden jeweils im Kneter zunächst wieder aufgeschmolzen und auf ca. 120°C gebracht wird, bevor die Anteile b) und c) der Komponente D jeweils zugesetzt und eingemischt werden. Die Applikationsfähigkeit der nach Zusatz der jeweiligen Anteile a) bis c) der Komponente D resultierenden und auf ca. 120°C gehaltenen Schmelze (Applikationsstandzeit *) sowie deren Übervernetzungszustand nach erfolgter thermoplastischer Applikation und anschließendem 30 minütigem Erwärmen auf 170°C sind ebenfalls in der Tabelle 1 angegeben.

*)Die angegebenen Zeiten stellen nicht die maximal resultierbaren Applikationsstandzeiten dar. Letztere liegen jeweils höher und wurden nicht ermittelt.

8

Tabelle 1

| Thermoplastische Haftkleberschmelze aus Beispiel | Thermoplastisch verarbeitbar nach Applikations-standzeit bei 120°C von | Schmelzverhalten der thermoplastisch applizierten Haftkleber-schmelze nach 30-minütiger thermischer Nachbehandlung bei 170°C | Oberflächenklebaktivität und Haftklebereigen-schaft des unschmelzbar gewordenen Haftklebers |
|---|---|---|---|
| 2 | 4 Stdn.: ja | unschmelzbar | typgerecht |
| 3 | 9 Stdn.: ja | unschmelzbar | typgerecht |
| 4 | 17 Stdn.: ja | unschmelzbar | typgerecht |
| 5 | 17 Stdn.: ja | unschmelzbar | typgerecht |
| 6 | 17 Stdn.: ja | unschmelzbar | typgerecht |
| Vergleichsbeisp. 1 | 15 Min.: ja | unschmelzbar | typgerecht |
| Vergleichsbeisp. 1 | 20 Min.: nein (Produkt ist unschmelzbar) | | |

## Patentansprüche

1. Klebaktive thermoplastische Massen mit hoher Kohäsion, geringer Fließneigung und verlängerter Applikationsstandzeit auf der Basis von Copolymerisaten ethylenisch ungesättigter Monomerer und chelatisierender Mittel, bestehend aus

A) 90 bis 99,99 Gew.-%, vorzugsweise 95 bis 99,9 Gew.-%, mindestens eines Copolymerisats aus

a) 20 bis 95 Gew.-%, vorzugsweise 40 bis 80 Gew.-%, mindestens eines ($C_1$-$C_{12}$)-Alkylesters $\alpha,\beta$-ethylenisch ungesättigter Mono- und/oder Dicarbonsäuren,

b) 0,1 bis 20 Gew.-%, vorzugsweise 0,5 bis 15 Gew.-%, mindestens eines am Stickstoff unsubstituierten Amids $\alpha,\beta$-ethylenisch ungesättigter Mono- und/oder Dicarbonsäuren,

c) 0,1 bis 15 Gew.-%, vorzugsweise 0,2 bis 10 Gew.-%, mindestens einer a,$\beta$-ethylenisch ungesättigten Mono- und/oder Dicarbonsäure, und

d) 0 bis 50 Gew.-%, vorzugsweise 0 bis 40, insbesondere 0,1 bis 30 Gew.-%, mindestens einer anderen, von den unter a) bis c) genannten Monomeren verschiedenen $\alpha,\beta$-ethylenisch ungesättigten copolymerisationsfähigen Verbindung, und

B) 0,01 bis 10 Gew.-%, vorzugsweise 0,1 bis 5 Gew.-%, mindestens einer vernetzend wirkenden Substanz, die eine Metallverbindung eines Acetessigsäurealkylesters mit 1 bis 6 C-Atomen in der Alkylgruppe oder eines zweiwertigen Alkohols mit 2 bis 6 C-Atomen ist, in der das Metallatom ein Element der zweiten, dritten oder vierten Gruppe des Periodensystems der Elemente ist, wobei sich die Mengen aus A) + B) sowie aus a) bis d) zu jeweils 100 Gew.-% ergänzen müssen, und gegebenenfalls

C) weiteren, als Streckmittel wirkenden sowie anderen üblichen Zusätzen, dadurch gekennzeichnet, daß die klebaktiven thermoplastischen Massen zusätzlich

D) eine wirksame Menge eines Vernetzungsregulators enthalten.

2. Klebaktive thermoplastische Massen nach Anspruch 1, dadurch gekennzeichnet, daß sie als Vernetzungsregulator ein Alkylphenolharz oder ein Arylphenolharz enthalten.

3. Klebaktive thermoplastische Massen nach Anspruch 1 oder 2, dadurch gekennzeichnet, daß sie als Vernetzungsregulator ein Alkylphenolharz des Resoltyps aus trifunktionellen und/oder vorzugsweise bifunktionellen ($C_1$-$C_{12}$)-Alkylphenolen, vorzugsweise ($C_3$-$C_8$)-Alkylphenolen, oder mehrfachfunktionellen p-Phenylphenolen und Aldehyden, vorzugsweise Formaldehyd, enthalten.

4. Klebaktive thermoplastische Massen nach einem oder mehreren der Ansprüche 1 bis 3, dadurch gekennzeichnet, daß sie 2 bis 20 Gew.-% Vernetzungsregulator, bezogen auf die Menge an Copolymerisat A), enthalten.

5. Klebaktive thermoplastische Massen nach einem oder mehreren der Ansprüche 1 bis 4, dadurch gekennzeichnet, daß sie als vernetzend wirkende Metallverbindungen B) Aluminiumalkoholate zweiwertiger Alkohole mit 2 bis 6 C-Atomen enthalten.

6. Klebaktive thermoplastische Massen nach einem oder mehreren der Ansprüche 1 bis 5, dadurch gekennzeichnet, daß das Copolymerisat A) als Monomereinheiten

a) 55 bis 65 Gew.-% 2-Ethylhexylacrylat,

15 bis 30 Gew.-% Butylacrylat,

3 bis 15 Gew.-% Methylmethacrylat

b) 2 bis 10 Gew.-% Acrylamid und

c) 0,3 bis 5 Gew.-% Acrylsäure, jeweils bezogen auf das Copolymerisat A), enthält.

7. Verfahren zur Herstellung von klebaktiven thermoplastischen Massen nach einem oder mehreren der Ansprüche 1 bis 6, dadurch gekennzeichnet, daß man in einem heizbaren Mischaggregat zunächst das Copolymerisat A) aufschmilzt, vorzugsweise bei 90 bis 130 °C, und dem geschmolzenen Copolymerisat A) den Vernetzungsregulator D) beimischt, wobei dieser sich in der Schmelze des Copolymerisats A) löst. Anschließend werden der Schmelze in dem beheizten Mischaggregat die Vernetzerkomponente B) und gegebenenfalls weitere Komponenten C) beigemischt und unter weiterer guter Durchmischung gelöst oder homogen dispergiert und die resultierende klebaktive polymere Masse, vorzugsweise unter ständiger guter Durchmischung und vorzugsweise bei Temperaturen bis zu 120 °C, in thermoplastisch applikationsfähigem Zustand gehalten und gegebenenfalls thermoplastisch appliziert.

8. Verfahren nach Anspruch 7, dadurch gekennzeichnet, daß man zunächst den Vernetzungsregulator D) und die Vernetzerkomponente B) sowie gegebenenfalls weitere Komponenten C) miteinander verschmilzt und das Schmelzprodukt mit der Copolymerisatschmelze A) vermischt.

9. Verfahren nach Ansprüchen 7 oder 8, dadurch gekennzeichnet, daß man den Vernetzungsregulator D) portionsweise in zeitlichen Abständen der thermoplastischen Masse beimischt.

10. Verwendung der klebaktiven thermoplastischen Massen nach Ansprüchen 1 bis 6 bzw. hergestellt nach Ansprüchen 7 bis 9 als Schmelzkleber, indem man sie bei Temperaturen unterhalb von 130°C thermoplastisch appliziert und nachfolgend durch thermische Nachbehandlung bei Temperaturen zwischen 130 und 200°C in unschmelzbare, klebaktive Produkte mit Haftklebereigenschaften überführt.

**Patentansprüche für folgenden Vertragsstaat: ES**

1. Verfahren zur Herstellung von klebaktiven thermoplastischen Massen mit hoher Kohäsion, geringer Fließneigung und verlängerter Applikationsstandzeit auf der Basis von Copolymerisaten ethylenisch ungesättigter Monomerer und chelatisierender Mittel, bestehend aus

A) 90 bis 99,99 Gew.-%, vorzugsweise 95 bis 99,99 Gew.%, mindestens eines Copolymerisats aus

a) 20 bis 95 Gew.-%, vorzugsweise 40 bis 80 Gew.-%, mindestens eines $(C_1-C_{12})$-Alkylesters $\alpha,\beta$-ethylenisch ungesättigter Mono- und/oder Dicarbonsäuren,

b) 0,1 bis 20 Gew.-%, vorzugsweise 0,5 bis 15 Gew.-%, mindestens eines am Stickstoff unsubstituierten Amids $\alpha,\beta$-ethylenisch ungesättigter Mono- und/oder Dicarbonsäuren,

c) 0,1 bis 15 Gew.-%, vorzugsweise 0,2 bis 10 Gew.-%, mindestens einer $\alpha,\beta$ -ethylenisch ungesättigten Mono- und/oder Dicarbonsäure, und

d) 0 bis 50 Gew.-%, vorzugsweise 0 bis 40, insbesondere 0,1 bis 30 Gew.-%, mindestens einer anderen, von den unter a) bis c) genannten Monomeren verschiedenen $\alpha,\beta$-ethylenisch ungesättigten copolymerisationsfähigen Verbindung, und

B) 0,01 bis 10 Gew.-%, vorzugsweise 0,1 bis 5 Gew.-%, mindestens einer vernetzend wirkenden Substanz, die eine Metallverbindung eines Acetessigsäurealkylesters mit 1 bis 6 C-Atomen in der Alkygruppe oder eines zweiwertigen Alkohols mit 2 bis 6 C-Atomen ist, in der das Metallatom ein Element der zweiten, dritten oder vierten Gruppe des Periodensystems der Elemente ist, wobei sich die Mengen aus A) + B) sowie aus a) bis d) zu jeweils 100 Gew.-% ergänzen müssen, und gegebenenfalls

C) weiteren, als Streckmittel wirkenden sowie anderen üblichen Zusätzen, dadurch gekennzeichnet, daß die klebaktiven thermoplastischen Massen zusätzlich

D) eine wirksame Menge eines Vernetzungsregulators enthalten, indem man in einem heizbaren Mischaggregat zunächst das Copolymerisat A) aufschmilzt, vorzugsweise bei 90 bis 130 °C, und dem geschmolzenen Copolymerisat A) den Vernetzungsregulator D) beimischt, wobei dieser sich in der Schmelze des Copolymerisats A) löst. Anschließend werden der Schmelze in dem beheizten Mischaggregat die Vernetzerkomponente B) und gegebenenfalls weitere Komponenten C) beigemischt und unter weiterer guter Durchmischung gelöst oder homogen dispergiert und die resultierende klebaktive polymere Masse, vorzugsweise unter ständiger guter Durchmischung und vorzugsweise bei Temperaturen bis zu 120 °C, in thermoplastisch applikationsfähigem Zustand gehalten und gegebenenfalls thermoplastisch appliziert.

2. Verfahren nach Anspruch 1, dadurch gekennzeichnet, daß man als Vernetzungsregulator ein Alkylphenolharz oder ein Arylphenolharz verwendet.

3. Verfahren nach Anspruch 1 oder 2, dadurch gekennzeichnet, daß man als Vernetzungsregulator ein Alkylphenolharz des Resoltyps aus trifunktionellen und/oder vorzugsweise bifunktionellen $(C_1-C_{12})$-Alkylphenolen, vorzugsweise $(C_3-C_8)$-Alkylphenolen, oder mehrfachfunktionellen p-Phenylphenolen und Aldehyden, vorzugsweise Formaldehyd verwendet.

4. Verfahren nach einem oder mehreren der Ansprüche 1 bis 3, dadurch gekennzeichnet, daß man 2 bis 20 Gew.-% Vernetzungsregulator, bezogen auf die Menge an Copolymerisat A), verwendet.

5. Verfahren nach einem oder mehreren der Ansprüche 1 bis 4, dadurch gekennzeichnet, daß man als vernetzend wirkende Metallverbindungen B) Aluminiumalkoholate zweiwertiger Alkohole mit 2 bis 6 C-Atomen verwendet.

6. Verfahren nach einem oder mehreren der Ansprüche 1 bis 5, dadurch gekennzeichnet, daß das Copolymerisat A) als Monomereinheiten

11

a) 55 bis 65 Gew.-% 2-Ethylhexylacrylat,

15 bis 30 Gew.-% Butylacrylat,

3 bis 15 Gew.-% Methylmethacrylat

b) 2 bis 10 Gew.-% Acrylamid und

c) 0,3 bis 5 Gew.-% Acrylsäure, jeweils bezogen auf das Copolymerisat A), enthält.

7. Verfahren nach einem oder mehreren der Ansprüche 1 bis 6, dadurch gekennzeichnet, daß man zunächst den Vernetzungsregulator D) und die Vernetzerkomponente B) sowie gegebenenfalls weitere Komponenten C) miteinander verschmilzt und das Schmelzprodukt mit der Copolymerisatschmelze A) vermischt.

8. Verfahren nach einem oder mehreren der Ansprüche 1 bis 6, dadurch gekennzeichnet, daß man den Vernetzungsregulator D) portionsweise in zeitlichen Abständen der thermoplastischen Masse beimischt.

9. Verwendung der klebaktiven thermoplastischen Massen, hergestellt nach Ansprüchen 1 bis 8, als Schmelzkleber, indem man sie bei Temperaturen unterhalb von 130 °C thermoplastisch appliziert und nachfolgend durch thermische Nachbehandlung bei Temperaturen zwischen 130 und 200 °C in unschmelzbare, klebaktive Produkte mit Haftklebereigenschaften überführt.